# EUROPEAN PATENT APPLICATION

(11) **EP 2 645 123 A1**
(43) Date of publication of application: **02.10.2013**
(21) Application number: 12161472.1
(22) Date of filing: 27.03.2012
(51) Int. Cl.: G01S 13/89, G01S 17/89

(54) **Imaging system and method**

(71) Applicant: Nederlandse Organisatie voor Toegepast -Natuurwetenschappelijk Onderzoek TNO, 2628 VK Delft (NL)
(72) Inventor: de Jong, Adriaan-Jan, 2628 VK Delft (NL)
(74) Representative: Jansen, Cornelis Marinus

(57) **Abstract**

Imaging system comprising:
-an illuminator (IL) configured to illuminate a target area using at least one illumination beam (B), the illumination beam (B) having a substantially elongated cross-section for illuminating at least one respective elongated first section of the target area;
-a detector (D) having at least one detector part, each with an elongated field of view, for detecting radiation emanating from a respective elongated second section of the target area;
the illuminator (IL) and detector (D) being arranged such that each elongated first section the target area traverses each elongated second section of the target area.

## Description

The invention relates to an imaging system and an imaging method.

W02009/106424 discloses a device and method for imaging an object using high frequency electromagnetic radiation. An embodiment of the device comprises a vertical row of radiation sources and receivers, and a cylindrical hollow mirror. To permit imaging in a horizontal direction, the row and mirror are pivotable about an axis of rotation. As a result, an entire object, arranged in an object plane, can be converted to a digital image by scanning.

The radiation sources and receivers are all arranged in the same row, in an irregular succession in mutually juxtaposed relationship. The scanning requires application of a mechanism and drive for rotating the device. For producing the image, synthetic aperture processing is required. This can only be achieved using phase coherent radiation.

As a result, the know system is relatively complex, sensitive to wear, relatively bulky and expensive.

The present invention aims to provide an improved imaging system and method. Particularly, the invention aims to provide a robust system that can provide an image of an object, or part thereof, using a relatively low number of radiation emitters and receivers.

To this aim, a system according to the present invention is characterised by the features of claim 1.

The imaging system comprises:
- an illuminator configured to illuminate a target area using at least one illumination beam, the illumination beam having a substantially elongated cross-section for illuminating at least one respective elongated first section of the target area;
- a detector having at least one detector part, each with an elongated field of view, for detecting radiation emanating from a respective elongated second section of the target area;
the illuminator and detector being arranged such that each elongated first section the target area traverses each elongated second section of the target area.

The system according to the invention can acquire an image in a relatively simple way, relatively swiftly compared to known systems, and using economical, relatively inexpensive means. Particularly, the system can have a robust configuration, and can image an object using a relatively low number of radiation emitters and receivers.

In a preferred embodiment, the illuminator, or the detector, or both the illuminator and the detector is/are stationary with respect to the target area. Thus, application of moving parts can be reduced or totally avoided, for example in case the system does not include any mechanical scanning means, leading to a fast, robust, reliable and durable system. Particularly, according to a further embodiment, the system may be configured to achieve electronic scanning of the target area.

Also, for example, the illuminator can be configured to emit at least one illumination beam having an elongated cross-section.

The illuminator can be configured to emit radiation having a frequency of at least 30 GHz, for example a frequency in the range of 30 to 300 Ghz, or another frequency or frequency range.

In a further embodiment, the illuminator and detector can be configured such that a central axis of each first second of said target area and a central axis of each elongated second section of the area that is to be imaged cross each other, for example at substantially right angles.

In a preferred embodiment, the illuminator is configured to emit a plurality of illumination beams towards different, for example adjacent, elongated first sections of the target area.

Also, the illuminator is configured to emit a single illumination beam towards different, for example adjacent, elongated first sections of the target area, for example by scanning the single illumination beam.

The illuminator can include at least one radiation source for generating a respective radiation beam, and an illumination beam former configured to form said illumination beam from said radiation beam.

Also, the detector can include at least one radiation sensor, and a focussing device configured to focus radiation emanating from each elongated second section of the target area onto the at least one radiation sensor. In that case, in a further embodiment, the detector can include a plurality of radiation sensors and a single focussing device, the focussing device being configured to focus radiation emanating from a plurality of elongated second sections of the target area onto respective radiation sensors.

In a further embodiment, the illuminator includes a linear array of radiation sources.

Also, in a further embodiment, the detector includes a linear array of radiations sensors.

Such an array is relatively easy to install and controllable, for example compared to a 2-dimensional array (e.g. a 2-dimensional CCD array). Also, it has been found that an illuminator including only a linear array of radiation sources may be configured to illuminate a relatively large target area. Similarly, it has been found that a detector including only a linear array of radiation sensors and a respective focussing device may be configured to detect radiation emanating from a relatively large target area.

Further, an aspect of the invention is defined by the features of claim 10. Accordingly, there is provided an imaging method, for example a method utilizing an imaging system according the invention, wherein the method includes:
- illuminating at least one elongated first section a target area with an illumination beam;
- detecting radiation emanating from a plurality of elongated second sections of the target area, for example adjacent second sections;
wherein each elongated first section traverses a plurality of second sections.

In this way, the above-mentioned advantages can be achieved.

For example a plurality of first target area sections can be illuminated in a predetermined sequence, for example one after the other.

In one embodiment, radiation emanating from a plurality of second target area sections is detected simultaneously. Besides, preferably, different target areas can be selected and imaged. Also, for example, the method may utilize a maximum of N radiation sources for illuminating N first sections of the target area, and a maximum of M radiation sensors for detecting radiation emanating from M second sections of the target area.

Detection results of the detecting of the radiation can be processed, to form an image of at least part of the target area. The formed imaged can for example be stored in a storing means, for example a memory or a data carrier. Also, the formed image can be displayed, on a display. The processing can be carried out by a processing unit, for example a computer or data processor, as will be appreciated by the skilled person.

Further advantageous embodiments are described in the dependent claims. The invention will be further elucidated by means of exemplary embodiments with reference to the accompanying drawings in which:
Figure 1 schematically depicts a system according to the invention, in a perspective view;
Figure 2 schematically depicts a top view of an illuminator part of the system shown in Fig. 1;
Figure 3 schematically depicts a cross-section over line III-III of Fig. 3;
Figure 4 schematically depicts a front view of the system; and
Figure 5 schematically depicts a front view of a target area.

Equal or corresponding features are denoted by equal or corresponding reference signs in the present application.

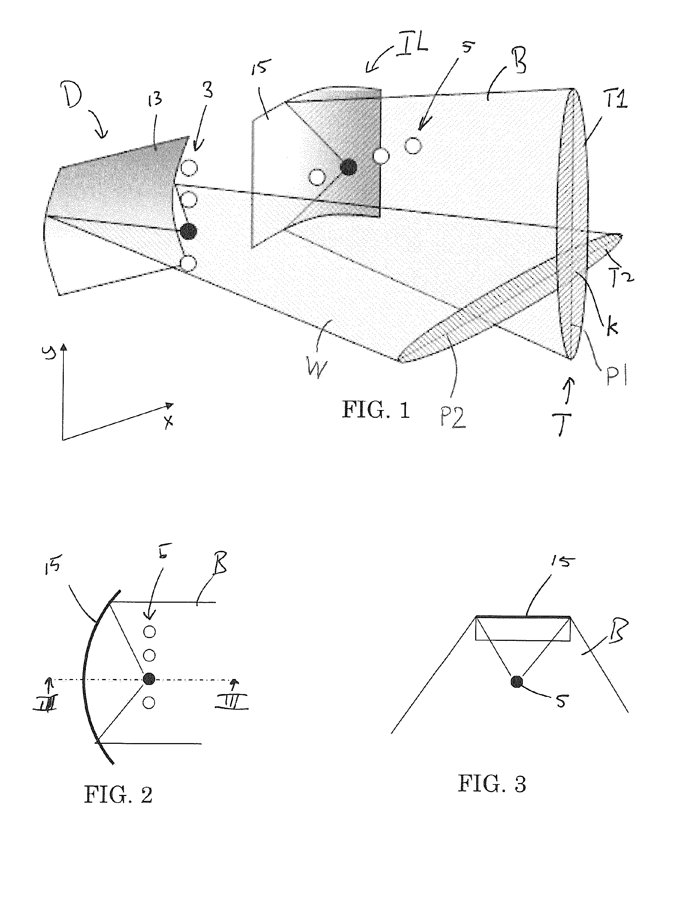

Figures 1-4 show a non-limiting example of an imaging system comprising an illuminator IL and a detector D.

The illuminator IL is configured to illuminate a remote target area T using at least one illumination beam B.

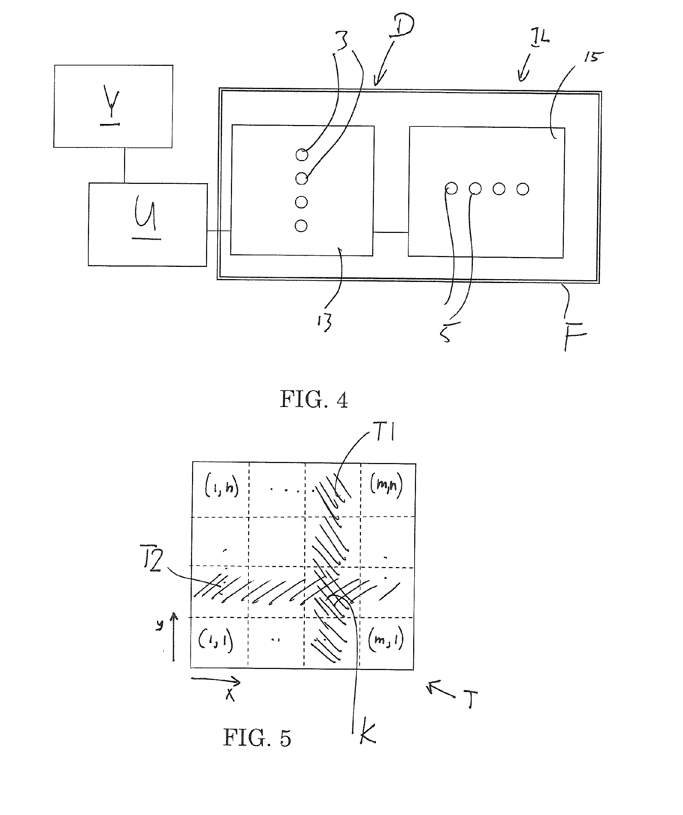

Figure 5 schematically shows a front view of a target area T. The target area may e.g. be divided in a grid of m x n sections (m and n both being an integer value of at least 1 or higher), associated with two target area directions x, y. The grid may e.g. be an orthogonal grid, in two orthogonal directions x, y, as in the drawing, but that is not required.

The target area T as such may have various shapes (e.g. flat/plain, or curved), as will be appreciated by the skilled person. In the present non-limiting example, reference is made to a virtual substantially plain target area T. During operation, particularly, the actual shape of the target area can depend on the shape of a target that is present at the target area T (for example in front of, in and/or behind the virtual plain target area T, as viewed from the illuminator IL), the target being an actual object that is to be imaged.

Preferably, said at least one illumination beam B has a substantially elongated cross-section (viewed in a traverse plane that is normal to the optical axis relating to that beam B) for illuminating at least one respective elongated first section T1 of the target area T. Particularly, a said elongated beam cross-section may be such that that beam B illuminates only a single one of the respective elongated first target area sections T1 at a time. Each elongated first section T1 of the target area may e.g. include one first row of the m x n target area sections (as has been indicated in Fig. 5 by cross-hatching), particularly one row that extends in parallel with one (in this example the y direction) of the target area directions x, y.

The detector D can include a number of detector parts 3, each with an elongated field of view W (viewed in cross-section, i.e. in a traverse plane that is normal to the respective optical axis), for detecting radiation emanating from a respective elongated second section T2 of the target area T. During operation, such radiation may e.g. be radiation that is reflected by an actual target that is located at the target area T during operation (the reflected radiation e.g. being a reflected part of a said illumination beam B). For example, the radiation that is returned from a target area T to the detector can be a same type of radiation as radiation (B) emitted by the illuminator IL. In another embodiment, radiation that is returned from a target area T to the detector D can be different from the type of radiation as radiation (B) emitted by the illuminator IL. The latter case may e.g. include conversion of incoming radiation at the target area T, e.g. by an object to be imaged, from one type of radiation to another type of radiation.

Particularly, a said elongated field of view W of the detector D may be such that it encompasses only a single one of the respective elongated second target area sections T2 at a time. Each elongated second section T2 of the target area may e.g. include one second row of the m x n target area sections (as has been indicated in Fig. 5 by cross-hatching), particularly a second row that extends in a different direction than said first row. In the example, the second row extends in parallel with one (in this example the x direction) of the target area directions x, y.

In an embodiment, the illuminator IL and detector D may be configured such that the illumination beam B (having the substantially elongated cross-section) traverses the instantaneous detector's elongated field of view W (particularly at the remote target area T). For example, the illuminator IL and detector D may be configured such that a central transversal axis P1 (being normal with respect to the respective optical axis) of the illumination beam B crosses a central elongated transversal axis P2 (being normal with respect to the respective optical axis) of the detector's elongated field of view W at a certain angle (e.g. in the target area), for example for example at a substantially right angle (about 90 degrees, for example an angle in the range of about 75 to 105 degrees) or another angle, for example an angle in the range of about 45 degrees to 135 degrees, yet another angle.

Also, in an embodiment, the illuminator IL may be arranged such that a central longitudinal plane of the respective radiation beam (the central plane including a respective optical axis of the beam B) includes an angle with the remote target area T (i.e. the angle of incidence), the angle e.g. being in the range of about 45 to about 135 degrees, e.g. an angle in the range of about 75 to about 115 degrees. This angle of incidence may vary during operation. Also, for example, different first sections T1 of the target area may be illuminated using mutually different angles of incidence, regarding the incoming radiation beam(s) B.

Also, in an embodiment, the detector D may be arranged such that a central longitudinal plane of the respective field of view (the central plane including a respective optical axis of the field of view) includes an angle with the remote target area T (i.e. an exit angle), the angle e.g. being in the range of about 45 to about 135 degrees, e. g. an angle in the range of about 75 to about 115 degrees. This exit angle may vary during operation. Also, for example, different second sections T2 of the target area may viewed at mutually different exit angles, by the detector D, regarding the retuned radiation.

Particularly, as follows from Fig. 1 and Fig. 5, the illuminator IL and detector D may be arranged such that each elongated first section T1 of the target area traverses each elongated second section T2 of the target area, i.e. at at least one actual detection area K. That is: a said detection area K is a part of the target area that is being illuminated by the illuminator IL, and that is also being viewed/detected/observed by the detector D. An actual detection area K is indicated in Figure 5 as well: it can be the area were the first grid row, being illuminated by the radiation beam, and the second row that is being viewed by the detector D, overlap one another.

In the present example, both the illuminator IL and the detector D may be stationary with respect to the target area T during operation. Thus, no target area scanning operation is performed by movement of the detector. Also, no target area scanning operation is performed by movement of the illuminator IL. In an alternative embodiment, the illuminator IL, the detector D, or both the illuminator IL and the detector D can be arranged to be moved with respect to the target area T to scan that area.

In the present example, the illuminator IL is configured to emit a plurality of illumination beams B (one being shown in Figures 1-3) towards different, adjacent and/or partly overlapping, elongated first sections of the target area. In an alternative example (not shown), the illuminator can be configured to emit a single illumination beam B towards different, for example adjacent or partly overlapping, elongated first sections of the target area, for example by scanning the single illumination beam B. In such a case, the illuminator or part thereof can be movable with respect to the target area.

In a preferred embodiment, the illuminator can be configured to emit radiation having a frequency of at least 30 GHz, for example a frequency in the range of 30 to 300 Ghz, or another frequency or frequency range

The illuminator IL may include a plurality radiation sources 5 for generating respective (preferably diverging) radiation beams R, and an illumination beam former 15 configured to form said illumination beam B from said radiation beam B. The example is provided with an arrangement of a single beam former 15 and an array of radiation sources 5, for generating respective radiation beams B.

In the present example, the illumination beam former 15 is a mirror, particularly a mirror having a mirroring surface in the shape of a circular-cylinder section (i.e., the mirror surface that faces the radiation sources 5 has a substantially circle-sectional cross-section, see Fig. 2). The illumination beam former (e.g. mirror) 15 focuses the radiation substantially in one axis (i.e. it focuses a parallel beam of the radiation to a line focus). Alternatively, an optical element such as a lens can be configured as the illumination beam former, for example lens, and particularly a Rotman lens, the lens being configured to focus a parallel beam of the radiation to a line focus. Such a lens can be positioned between the plurality of radiation sources 5 and the target area.

The plurality of radiation sources may be located along or near the line focus of the beam former 15, and in parallel there-with, for emitting respective radiation towards the beam former 15, the beam former 15 forming the respective radiation beams B (with elongated cross-sections) from that radiation. See also Figures 2, 3, showing the respective arrangement of the example of an array of sources 5 and a (reflective) beam former 15.

The radiation sources 5 as such (depicted as point sources in the example) can include various type of radiation sources, depending e.g. on the type of radiation that is to be transmitted, as will be appreciated by the skilled person. For example, the radiation sources 5 may be coherent or incoherent radiation sources. The radiation sources 5 may be solid state oscillators, LED (light emitting diode) sources, or different sources. The sources may be configured to emit different types of radiation, for example unmodulated radiation of a single frequency (i.e. a spectrally pure radiation source), which can be achieved in a relatively economical and simple way, thereby avoiding system complexity. Also, the sources may be configured to emit unmodulated radiation of multiple frequencies.

Besides, in another embodiment the sources may be configured to emit modulated radiation. Application of modulated radiation may increase selectivity and sensitivity. In a further embodiment, the modulated radiation may include a carrier signal (e.g. having a carrier frequency) that is modulated with information. A modulation that can be used may for example include pulse modulation, FMCW (frequency modulation continuous wave) modulation, or a different type of modulation. In a further embodiment, application of modulated radiation can provide for obtaining distance information, which can be used to provide a three-dimensional image of a three-dimensional target area.

In the example, the radiation sources 5 are shown to be spaced-apart, at equal distances between nearest neighbours. The radiation sources 5 may also be mutually arranged differently.

In the example, there is provided an array of individual radiation sources 5 (e.g. a linear array), extending in a first direction. The source array 5 may e.g. along a first direction, for example a first direction that is in parallel with elongated second sections T2 of the target area (i.e. in parallel with a first target area direction x), as in the present example. The first direction may be normally with respect to the central transversal axes P1 of the respective elongated beams B. The source array 5 may also extend along a different second direction.

The detector D can include a plurality of detector parts 3, each with a cross-sectional elongated field of view W, for detecting radiation emanating from the plurality of elongated second sections of the target area.

For example, the present detector D may includes a plurality of radiation sensors 3, and a focussing device 13 configured to focus radiation emanating from a plurality of elongated second sections of the target area onto respective radiation sensors. In this example, the plurality of radiation sensors is an array of such sensors 3 (e.g. a linear array). The sensor array may e.g. along a second direction, for example a second direction that is in parallel with elongated first sections T1 of the target area (i.e. in parallel with a second target area direction y), as in the present example. The second direction may be normally with respect to the fields of view of the respective elongated fields of view W 3. The sensor array 3 may also extend along a different second direction.

The plurality of sensors 3 may e. g. be located along or near the line focus of the respective focussing device 13, and in parallel there-with, for receiving radiation from the focussing device 13, the focussing device 13 receiving that radiation from respective fields of view W (with elongated cross-sections) during operation.

The sensors 3 as such can include various type sensors, depending e.g. on the type of radiation that is to be detected, as will be appreciated by the skilled person. For example, the sensors 3 may be or include semiconductor-type detectors, diode-type detectors, or different detectors.

As an example, in case the radiation sources are configured to emit unmodulated radiation, the sensors 3 may be configured to detect such unmodulated radiation. In case the radiation sources are configured to emit modulated radiation, the sensors 3 may be configured to detect such modulated radiation. In the later case, the system may include demodulation means for demodulating radiation that is received by the sensors 3, particularly for extracting information modulated in the radiation emitted by the sources.

Also, in the example, the local sensors 3 are shown to be spaced-apart, at equal distances between nearest neighbours. Sensors 3 may also be arranged differently with respect to one another.

Figure 4 schematically depicts a further embodiment of the system, with a said illuminator IL and a said detector D being associated with one another via a respective structure F, e.g. a housing, a frame or the-like. It should be understood that the illuminator IL and detector D can also be arranged separate from each other, for example having individual housings or individual support structures.

Also, the system may be provided with a processing unit U (schematically depicted) for controlling operation of the system. The processing unit U may include e.g. a data processor, computer, memory means, communication means, a user interface and the-like, for controlling the system. Also, a display Y can be provided, for displaying an imaging result (i.e. an image of a target).

The processing unit U may e. g. be configured to control the illuminator, for transmitting the said radiation beams B. In a further embodiment, the processing unit U may be configured for individually controlling the radiation sources 5 of the illuminator. As an example, the processing unit U may be configured to control the illuminator I such that the illuminator transmits different radiation beams B (e.g. associated with the different radiation sources 5) at a predetermined order/sequence, for example one after the other.

Also, the processing unit U may be configured to control the illuminator I such that the illuminator repeatedly transmits a set of different radiation beams B (e.g. associated with the different radiation sources 5) for repeatedly illuminating all (m) elongated first sections of the target area (i.e. the entire target area T). In each such illumination cycle, the beams B can be emitted in said predetermined order. In a basic embodiment, the processing unit U is configured to control the illuminator I such that the illuminator illuminates the entire target area T at least once (with said beams B).

The processing unit U may also be configured to receive detection signals from the detector D, and to process those results to form an image of (at least part) of the target area T. The processing unit U may be configured to store the image in a suitable memory, and/or to display the image (e.g. via the display Y).

Optionally, the processing unit U may include the afore-mentioned demodulation means, particularly in case the system (i.e. the radiation sources and the radiation sensors) is configured to make use of modulated radiation.

In a further, preferred, embodiment, the processing unit U may use information regarding the transmission of the radiation beams B in the processing of the detector detection results. Particularly, such information may be a timing (e.g. an afore-mentioned predetermined order/sequence) of the transmission of the individual beams B.

Particularly, the processing unit U may be configured to correlate the different radiation detection results, provided by the different sensor parts 3 of the detector D (viewing respective second elongated target area sections T2), with the illuminated first elongated target area sections T1 (the illumination being provided by the beams B). The correlation determination can be carried out e.g. using the above-mentioned information regarding beam emission sequence. Thus, the processing unit U may determine detection results regarding all detection areas K (i.e. [(1,1)....(m, n)]) of the target area T.

An embodiment of the invention provides an imaging method, which method may e. g. include the use of a system according to the invention. The following non-limiting example with explain such a method with reference to figures 1-4.

The system shown in Figures 1-4 can carry out an imaging method, the method including:
- illuminating elongated first sections T1 of the target area T with the illumination beams B;
- detecting radiation emanating from the plurality of elongated second sections T2 of the target area T, for example adjacent or partly overlapping second sections;
each elongated first section T1 traversing a plurality of second sections T2.

As is mentioned above, the plurality of first target area sections T1 may be illuminated in a predetermined sequence (by the illuminator IL), for example one after the other. Particularly, all first target area sections T1 may be illuminated at least once, e.g. in a respective first cycle of a number of target area illumination cycles. In the depicted example, the individual sources 5 of the illuminator may be individually activated and deactivated, to emit radiation one after the other, for forming respective beams B with elongated cross-sections via the beam former 15.

During operation, the detector D may detect radiation emanating from a plurality of second target area sections T2 e.g. simultaneously, however, that is not required.

For example an alternative embodiment may include scanning of the target area by a detector, wherein an elongated field of view (associated with a sensor part of the detector, for example a movable sensor part if available) is subsequently aimed at at least two second target area sections T2 during illumination of one of the first target area sections T1.

In a further embodiment, the detector D (e.g. its sensor parts 5) may detect radiation emanating from the entire target area T.

As follows from the above, the method may be such that each illumination beam B (having the substantially elongated cross-section) traverses the instantaneous detector's elongated field of view W (particularly at the remote target area T). A central transversal axis P1 (being normal with respect to the respective optical axis) of the illumination beam B may cross a central elongated transversal axis P2 (being normal with respect to the respective optical axis) of the a said elongated field of view W at a certain angle (e.g. in the target area), for example for example at a substantially right angle (about 90 degrees, for example an angle in the range of about 75 to 105 degrees) or another angle, for example an angle in the range of about 45 degrees to 135 degrees, yet another angle.

Also, in an embodiment of the method, each elongated first section T1 of the target area may traverse each elongated second section T2 of the target area, i.e. at at least one actual detection area K. That is: a said detection area K is a part of the target area that is being illuminated by the illuminat0r IL, and that is also being viewed/detected/observed by the detector D.

Detection results relating to second target area sections T2 (particularly all detection results relating to the same illumination cycle) may be correlated with first target area sections T1, in the processing for acquiring an image of the target area T.

In a preferred embodiment, as follows from the above, the method utilizes a maximum of m radiation sources for illuminating m first sections of the target area, and a maximum of n radiation sensors for detecting radiation emanating from n second sections of the target area.

The different radiation detection results, relating to the various second elongated target area sections T2, may be correlated with the illuminated first elongated target area sections T1 (the illumination being provided by the beams B). Thus, detection results regarding all detection areas K (i.e. [(1,1)....(m, n)]) of the target area T can be discerned, to be processed to form an image of a target. The method can include including processing detection results of the detecting of the radiation, to form the image of at least part of the target area (i.e. of a target), and for example storing and/or displaying the (e.g. 2-dimensional) image.

In this manner, a relatively small number of components can be used, in a relatively robust system, to obtain an accurate image of a target that may be present in/near the target area during use.

In a further embodiment, a length of a projected line in the target area (e.g. the length of a said first elongated section T1) can be such that that line (i.e. first target area section T1) is entirely within the overall field of view of the detector D. In a further efficient embodiment, there can be provided a beam former 15, e.g. a cylindrical mirror, of a width that corresponds to said overall field of view of the detector.

Although illustrative embodiments of the present invention have been described in greater detail with reference to the accompanying drawings, it is to be understood that the invention is not limited to these embodiments. Various changes or modifications may be effected by one skilled in the art without departing from the scope or spirit of the invention as defined in the claims.

It is to be understood that in the present application, the term "comprising" does not exclude other elements or steps. Also, each of the terms "a" and "an" does not exclude a plurality. Any reference sign(s) in the claims shall not be construed as limiting the scope of the claims. Also, a single controller, processor or other unit may fulfil functions of several means recited in the claims.

For example, according to a further embodiment, the illumination beams B may be radar beams B. In a further embodiment, the system can be configured to process the detection result/signals (provided by the detector D) to determine or estimate a distance between the detector D and the target area T (or a target located in the target area). Resulting distance information may be used in the processing of the images, for example for providing a series of images of the target obtained at different distances (i.e. different slices of the target).

Also, in a further embodiment, a spectrum of emitted illumination beams B may be incoherent, to prevent interference effects.

Besides, in a further embodiment, a number (for example all) first elongated sections T1 of the target area T may be illuminated simultaneously utilizing mutually different radiation beams, for example beams with mutually different (discernable, detectable) characteristics, e.g. wavelengths, beam identifying information (e.g. information or a unique code, regarding that beam, that is modulated on a beam carrier frequency), and/or in a different manner. In such a case, the detector D may be configured to detect respective radiation, wherein the detection results can be processed (by a said processing unit U) using the different beam characteristics to associate/correlate the results with the individual beams B.

## Claims

1. Imaging system comprising:
- an illuminator (IL) configured to illuminate a target area using at least one illumination beam (B), the illumination beam (B) having a substantially elongated cross-section for illuminating at least one respective elongated first section(T1) of the target area (T);
- a detector (D) having at least one detector part, each with an elongated field of view, for detecting radiation emanating from a respective elongated second section (T2) of the target area;
the illuminator (IL) and detector (D) being arranged such that each elongated first section the target area traverses each elongated second section of the target area.

2. The system according to claim 1, wherein the illuminator (IL), or the detector (D), or both the illuminator and the detector is/are stationary with respect to the target area.

3. The system according to any of the preceding claims, wherein the illuminator (IL) is configured to emit a plurality of illumination beams (B) towards different, for example adjacent or partly overlapping, elongated first sections of the target area.

4. The system according to any of the claims 1-3, wherein the illuminator (IL) is configured to emit a single illumination beam (B) towards different, for example adjacent or partly overlapping, elongated first sections of the target area, for example by scanning the single illumination beam (B).

5. The system according to any of the preceding claims, wherein the detector (D) includes a plurality of detector parts, each with an elongated field of view, for detecting radiation emanating from plurality of elongated second sections of the target area.

6. The system according to any of the preceding claims, wherein the illuminator (IL) includes at least one radiation source (5) for generating a respective radiation beam (R), and an illumination beam former (15) configured to form said illumination beam (B) from said radiation beam (B).

7. The system according to any of the preceding claims, wherein the detector (D) include at least one radiation sensor (3), and a focussing device (13) configured to focus radiation emanating from each elongated second section (T2) of the target area (T) onto the at least one radiation sensor (3).

8. The system according to claim 7, wherein the detector (D) includes a plurality of radiation sensors and a single focussing device (15), the focussing device (15) being configured to focus radiation emanating from a plurality of elongated second sections of the target area onto respective radiation sensors.

9. The system according to any of the preceding claims, wherein the illuminator is configured to emit radiation having a frequency of at least 30 GHz, for example a frequency in the range of 30 to 300 Ghz.

10. An imaging method, for example a method utilizing an imaging system according to any of the preceding claims, wherein the method includes:
- illuminating at least one elongated first section a target area with an illumination beam (B);
- detecting radiation emanating from a plurality of elongated second sections of the target area, for example adjacent or partly overlapping second sections;
wherein each elongated first section traverses a plurality of second sections.

11. The method according to claim 10, wherein a plurality of first target area sections is illuminated in a predetermined sequence, for example one after the other.

12. The method according to claim 10 or 11, wherein radiation emanating from a plurality of second target area sections is detected simultaneously.

13. The method according to any of claims 10-12, wherein detection results relating to second target area sections are correlated with first target area sections.

14. The method according to any of claims 10-13, wherein the method utilizes a maximum of m radiation sources for illuminating m first sections of the target area, and a maximum of n radiation sensors for detecting radiation emanating from n second sections of the target area.

15. The method according to any of claims 10-14, including processing detection results of the detecting of the radiation, to form an image of at least part of the target area, and for example storing and/or displaying the image.
